# EUROPEAN PATENT APPLICATION

(11) **EP 0 700 745 A1**
(43) Date of publication of application: **13.03.1996**
(21) Application number: 95909100.0
(22) Date of filing: 16.02.1995
(51) Int. Cl.: B23H 1/02

(54) **JUMP CONTROLLING METHOD FOR DIE SINKING ELECTRIC DISCHARGE MACHINE**

(30) Priority: 10.03.1994 JP 65411/94
(71) Applicant: FANUC LTD., Minamitsuru-gun, Yamanashi 401-05 (JP)
(72) Inventor: KURAKAWA, Kazuhiko Room 11-204 Fanuc Manshion, Minamitsuru-gun, Yamanashi 401-05 (JP); MASUDA, Teruo Fanuc Dai-3 Vira-karamatsu, Yamanashi 401-05 (JP)
(74) Representative: Billington, Lawrence Emlyn
(86) International application number: JP9500217
(87) International publication number: WO9524288

(57) **Abstract**

A jump controlling method for a die sinking electric discharge machine, comprising temporarily stopping discharge during processing, widening a gap between a tool electrode and an object being processed, introducing a processing liquid into the gap, and then narrowing the gap to thereby remove processing chips generated in the gap together with the processing liquid. In the method, a program for executing a jump operation is prepared as a sub-program. A main program (1) for performing electric discharge machining is temporarily interrupted by an interrupt signal which is inputted during execution of the main program (1), an execution state of the main program is stored at the time of interruption of the main program (1) to permit the sub-program (2) to be executed, and after the completion of a jump operation by the sub-program (2) the stored execution state of the main program is read to restart the main program (1) where it was interrupted. Accordingly, in the jump controlling method for a die sinking electric discharge machine, it is possible to perform a jump operation by means of the sub-program and start the jump operation by means of an interrupt signal.

## Description

### TECHNICAL FIELD

This invention relates to a discharge processing machine, more particularly to a method for controlling occasional jump (escape of electrode) operation during diesinking operation of the discharge processing machine.

### BACKGROUND ART

In general, during the diesinking discharge machining operation, machining chips tend to accumulate in a gap between the workpiece and tool electrode. The amount of machining chips accumulated in the gap increases as the machining operation progresses. The machining chips adds to the contamination of the gap. When the contamination progresses extremely, it becomes a hindrance to the normal discharge machining operation. Conventionally, the accumulation of machining chips in the gap, has been removed through a series of steps comprising widening the gap between the workpiece and the machining electrode by retreating the machining electrode from the workpiece, introducing the surrounding machining fluid into the gap, and thereafter bringing the machining electrode closer to the workpiece again. With this method, the machining chips accumulated in the gap can be removed or drained together with the machining fluid. The operation comprising above steps is referred to as a jump operation of the electrode (i.e. escape of electrode).

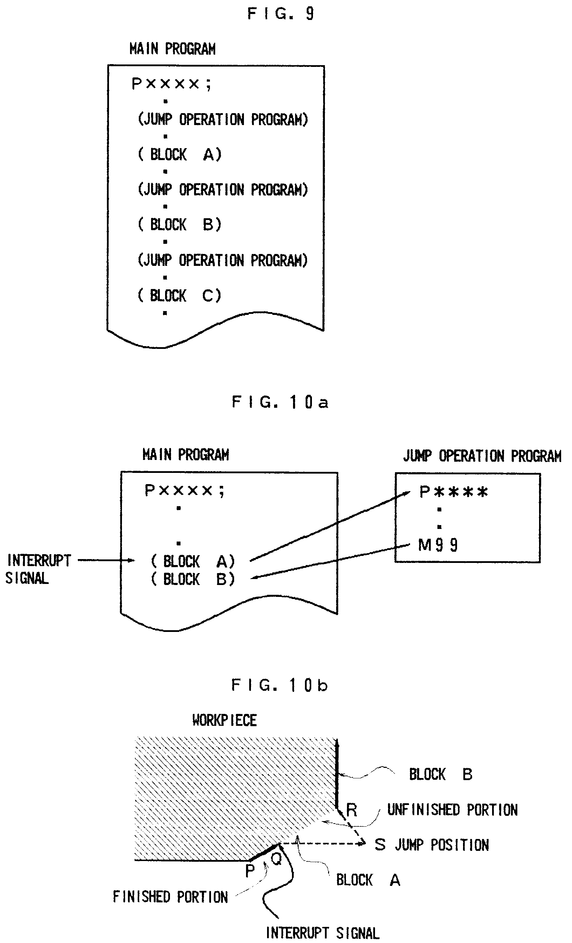

Usually, the diesinking discharge machining operation is controlled by the program which is generally constituted of a combination of plural blocks corresponding to various machining operations. Conventionally, the jump operation in the diesinking discharge machining operation is controlled in accordance with a program dedicated to the execution of the jump operation which is incorporated in the main program of machining program. Fig. 9 shows one example of the main program which performs a conventional diesinking discharge machining operation. This main program comprises a plurality of jump operation programs. These jump operation programs are adequately incorporated into the main program by a programmer when he/she creates the main program. These jump programs are incorporated into the main program either at regular intervals to be executed periodically or at intervals determined based on the empirically estimated frequency of the machining chip accumulation, though such frequency varies depending on the kind of machining block.

During the execution of the machining program, the jump operation program is executed whenever the machining program progresses up to each jump operation program. The execution of jump operation program causes the electrode to jump once increasing the gap between the electrode and the workpiece, and the electrode is again brought closer to the electrode. The operation such that the next machining block will be executed is repeated by the main program.

Accordingly, the main program of the conventional machining program comprises a plurality of jump operation programs and programs for executing respective machining blocks. The jump operation programs are usually provided as many as the total number of necessary jump operations.

Hence, according to the above-described conventional control method of jump operations, it is necessary to incorporate the jump operation programs into the main program as many as the total number of jump operations. Therefore, the conventional jump operation control is disadvantageous in that the creation of the program is complicated.

Furthermore, even when the contamination of the gap between the electrode and the workpiece due to the accumulation of the machining chips has progressed to the limit, the jump operation will not take place until the machining program progresses to the stage of jump operation program. Consequently, the conventional jump operation control is disadvantageous in that it sometimes caused poor machining condition.

On the other hand, in the case where the same operation is repetitively performed using the program, it is known that such repetitive operation can be controlled by a subprogram. However, on study of the application of such a subprogramming method to the jumping operation, the present inventor has learnt that the direct application of this method has a problem that, with this method, the electric discharge machining cannot be finished completely because of the occurrence of unprocessed portions.

Figs. 10a and 10b schematically illustrate the case where the jump operation program is created as a subprogram. In this case, if an interrupt signal is entered while the block "A" of the main program is in progress, this interrupt signal becomes a trigger to switch over the control procedure to the subprogram for the jump operation, thereby performing the jump operation.

Normally, the main program interrupts the execution of its block currently in progress in response to the interrupt signal, and instead causes the designated subprogram to be executed. After the execution of the subprogram is completed, the control procedure is taken over by the main program to resume its progress. In such a case, however, the main program restarts its execution from the head of the next block, without executing the remainder of the interrupted block. More specifically, as shown in Fig. 10a, when the interrupt signal is entered during the machining operation by the block "A", the subprogram for the jump operation is started at the same time. Once the jump operation program is executed completely, the main program restarts its progress from the head of the next block "B".

Fig. 10b shows a machining condition of the workpiece to be machined by executing the above-described program. The block "A" represents a machining section extending from the point "P" to the point "R", and it is assumed that the interrupt signal is entered at the intermediate point "Q" on the machining trace of above block "A". The machining for the section ranging from the point "P" to the point "Q" is already finished in this case, while the machining of the section ranging from the point "Q" and the point "R" remains unfinished. When the interrupt signal is entered at the point "Q", the electrode as a machining tool jumps to a predetermined jump position "S" (refer to the broken line in the drawing). During this jump operation, machining fluid removes the accumulated machining chips from the gap. After the jump operation program is executed completely, the electrode returns from the point "S" to the point "R" (refer to the broken line in the drawing).

The return point "R" of the electrode is different from the point "Q" where the jump operation is initiated, so that discharge machining operation is not performed in the section ranging from the point "Q" to the point "R" on the workpiece, thereby leaving this section unmachined.

### DISCLOSURE OF INVENTION

An object of the present invention is to provide a jump control method for the electrode of a diesinking discharge processing machine which is designed for solving the above-described problem of the prior art by enabling the jump operation of the electrode to be controlled according to a subprogram.

Furthermore, another object of the present invention is to provide a jump control method for a diesinking discharge processing machine capable of starting the jump operation in response to an interrupt signal.

In order to accomplish the above first object, the present invention provides a jump control method using a subprogram for controlling a jump operation of a tool electrode in a diesinking discharge processing machine, the method comprising steps of temporarily stopping discharge during a machining operation, widening a gap between the tool electrode and a workpiece, supplying machining fluid into the gap, and thereafter narrowing the gap, in order to remove machining chips accumulated in the gap to be removed together with the machining fluid, wherein a program for performing the jump operation is created as a subprogram, the subprogram is executed by interrupting the progress of a main program for performing a discharge machining operation, and the execution of the main program is resumed from the interrupted point after the jump operation is finished in accordance with the subprogram.

Furthermore, in order to accomplish the above second object, the present invention provides a jump control method using interruption signal for controlling a jump operation of a tool electrode in a diesinking discharge processing machine, the method comprising steps of temporarily stopping discharge during a machining operation, widening a gap between the tool electrode and a workpiece, supplying machining fluid into the gap, and narrowing the gap, in order to remove machining chips accumulated in the gap together with the machining fluid, wherein a program for performing the jump operation is created as a subprogram, the subprogram is executed in response to an interrupt signal by interrupting the execution of the main program for performing a machining operation, and the execution of the main program is resumed from an interrupted point after the jump operation is finished in accordance with the subprogram.

Moreover, in order to accomplish above and related objects, the present invention provide a jump control method for controlling a jump operation of a tool electrode in a diesinking discharge processing machine, the method comprising steps of temporarily stopping electric discharge during a machining operation, widening a gap between the tool electrode and a workpiece, supplying machining fluid into the gap, and narrowing the gap, in order to remove machining chips accumulated in the gap together with the machining fluid, wherein a program for performing the jump operation is created as a subprogram, the subprogram is executed in response to an interruption signal by interrupting the execution of the main program for performing a machining operation after memorizing the progress of the main program up to the point of interruption, and the execution of the main program is resumed from the point of interruption by reading out its memorized progress after the jump operation is finished in accordance with the subprogram.

Yet further, in the present invention, the discharge processing machine memorizes the position of the tool electrode and residual commands in the main program for memorizing the portion of the main program executed prior to the time of its interruption. Still further, the discharge processing machine is capable of memorizing the residual commands ins counter that counts down in accordance with progress of the main program.

The subprogram of the present invention is created independent of the main program, which contains machining programs for executing various machining operations, and is designed exclusively for jump operation program for executing the jump operation. Execution of this subprogram brings about the control of the operation for moving the tool electrode or both the tool electrode and the workpiece and also the control of operation for varying the extent of the gap between the tool electrode and the workpiece.

According to the present invention, there is provided a jump control method for controlling a jump operation of the tool electrode in the diesinking discharge processing machine, the method comprising steps of temporarily stopping a discharge between the tool electrode and the workpiece in a machining operation, widening a gap between the tool electrode and the workpiece, supplying machining fluid into the widened gap, and narrowing the gap, in order to remove machining chips accumulated in the gap together with the drained machining fluid, wherein the subprogram created beforehand for performing the jump operation is executed by interrupting the execution of the main program for performing the discharge machining operation, thereby executing the jump operation of changing the width of gap between the tool electrode and the workpiece. Then, after the jump operation is finished in accordance with the subprogram, the main program is executed again from the point of its interruption, whereby the jump control method designed for the jump operation according to the subprogram becomes possible.

Furthermore, according to the present invention, there is provided a jump control method for controlling a jump operation of the tool electrode in the diesinking discharge processing machine, the method comprising steps of temporarily stopping a discharge produced between the tool electrode and the workpiece in a machining operation, widening a gap between the tool electrode and the workpiece, supplying machining fluid into the widened gap, and thereafter narrowing the gap, in order to remove machining chips accumulated in the gap together with the drained machining fluid, wherein the subprogram created beforehand for performing the jump operation is executed by interrupting the main program for performing the discharge machining operation in response to an entered interrupt signal, thereby executing the jump operation for changing the gap width between the tool electrode and the workpiece. Then, after the jump operation is finished in accordance with the subprogram, the main program is executed again from its interrupted point, whereby the jump control method which starts the jump operation in response to the interrupt signal becomes possible.

Still further, according to the present invention, there is provided a jump control method for controlling a jump operation of the tool electrode in the diesinking discharge processing machine, the method comprising steps of temporarily stopping a discharge produced between the tool electrode and the workpiece in a machining operation, widening a gap between the tool electrode and the workpiece, supplying machining fluid into the widened gap, and narrowing the gap, in order to remove machining chips accumulated in the gap together with the drained machining fluid, wherein the subprogram created beforehand for performing the jump operation is executed by interrupting the main program for the discharge machining operation in response to an entered interrupt signal, and the progress of the main program up to the time of its interruption is stored, thereby executing the jump operation for changing the width of gap between the tool electrode and the workpiece. Then, after the jump operation is finished in accordance with the subprogram, the execution of the main program is resumed from an interrupted point by reading out the stored progress of execution, whereby the jump control method which executes the jump operation in accordance with the subprogram and the start of the jump operation in response to the interrupt signal become possible.

Moreover, in the jump control method of the above diesinking discharge processing machine, the main program is interrupted in response to the interrupt signal entered during the execution of the main program for performing the discharge machining operation. Upon interruption of the main program, the position of the tool electrode and the unexecuted residual commands in the main program are stored as indicating the progress of the main program up to the time of its interruption. These residual commands can be stored in the counter that counts down in accordance with progress of the main program. The jump operation for changing the gap width between the tool electrode and the workpiece is carried out by executing the subprogram created beforehand for performing the jump operation. After finishing the jump operation in accordance with the subprogram, the stored progress of the main program is read out and the main program is resumed from its interrupted point. In this manner, the jump control of the present invention is performed.

### BRIEF DESCRIPTION OF DRAWINGS

Fig. 1 is a diagram schematically illustrating composition of a program, used for embodying a jump control method in accordance with the present invention;
Fig. 2 is a diagram illustrating programmed operations for the jump control in accordance with the present invention;
Fig. 3 is a schematic block diagram showing a first composition of a discharge processing machine for performing the jump control of the present invention;
Fig. 4 is a schematic block diagram showing a second composition of a discharge processing machine for performing the jump control of the present invention;
Figs. 5a and 5b are diagrams illustrating the jump control operation of the present invention;
Fig. 6 is a flow chart showing steps of the jump control by the present invention;
Fig. 7 is a diagram illustrating the jump operation of the present invention;
Figs. 8a and 8b are diagrams illustrating the jump operation of the present invention;
Fig. 9 is a diagram showing one example of a main program, used for performing a conventional diesinking discharge operation; and
Figs. 10a and 10b are diagrams illustrating a jump operation program formed as a subprogram.

### BEST MODE FOR CARRYING OUT THE INVENTION

Hereinafter, embodiments of the present invention will be explained in detail with reference to the accompanying drawings, although the present invention should not be limited to these embodiments.

### (Composition of a Discharge Processing Machine used for the embodiments of the Present Invention)

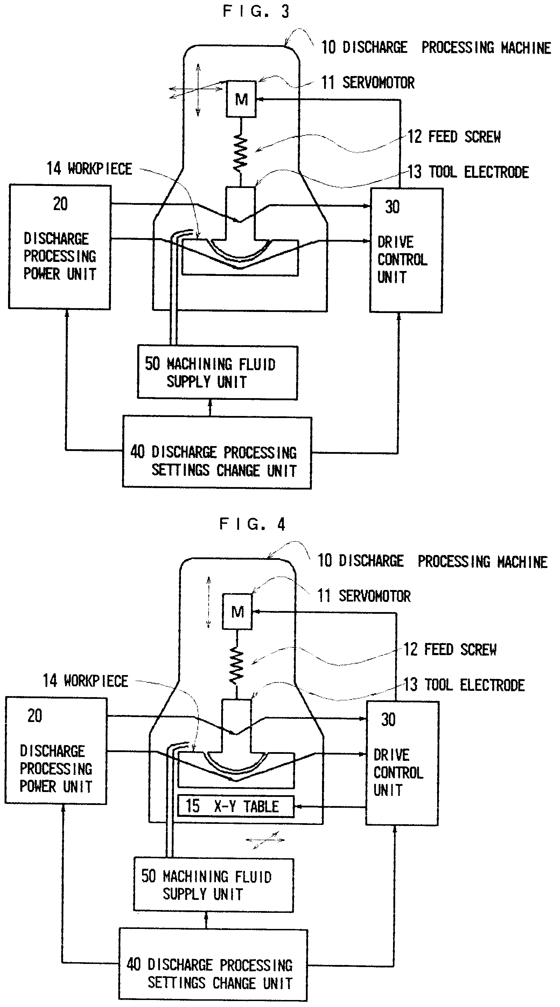

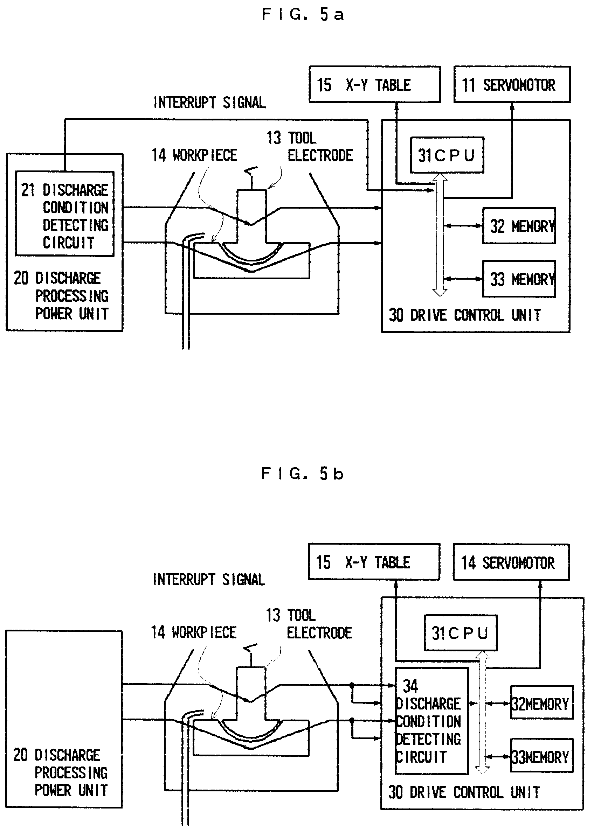

First, the composition of the discharge processing machine used for the first embodiments of the present invention will be explained with reference to the block diagram of Fig. 3 showing the first composition of the discharge processing machine and the block diagram of Fig. 4 showing the second composition of the discharge processing machine.

### First Composition:

In the first composition of the discharge processing machine shown in Fig. 3, reference numeral 10 represents a discharge processing machine, 20 a discharge processing power unit, 30 a drive control unit, 40 a discharge processing settings change unit, and 50 a machining fluid supply unit.

The discharge processing machine 10, constituted in the same manner as a conventional discharge processing machine, comprises a tool electrode 13 confronting a workpiece 14 through an extremely small gap. A servomotor 11 drives the tool electrode 13 via a transmitting means for converting a rotational motion of a feed screw 12 or the like into a linear motion. The servomotor 11 can drive in an X-axis direction, a Y-axis direction and a Z-axis direction in response to drive control signals given from the drive control unit 30. Thus, the servomotor 11, when it is activated in the X-axis direction, Y-axis direction and Z-axis direction, can move the tool electrode 13 three-dimensionally with respect to the workpiece 14.

The discharge processing power unit 20, having substantially the same construction as a conventional discharge processing power unit, applies an electric voltage between the tool electrode 13 and the workpiece 14, thereby causing electric discharge to be produced between them.

The drive control unit 30, acting as a device for adjusting relative positional relationship between the tool electrode 13 and the workpiece 14, generates the drive control signals in accordance with a gap voltage between the tool electrode 13 and the workpiece 14 or set values given from the discharge processing settings change unit 40. These drive control signals are used for controlling the servomotor 11. Furthermore, the drive control unit 30 of the present invention has a memory for storing the latest condition of program when the execution of the program is interrupted in response to an interrupt signal. The drive control unit 30 comprises a CPU for controlling the input of data to the memory and output of data from the same. Function of this memory and jump control operation of the diesinking discharge processing machine of the present invention using this memory will be explained later.

The discharge processing settings change unit 40, having substantially the same construction as a conventional discharge processing settings change unit, can change set values of various processing conditions. These set values are outputted to the discharge processing power unit 20 and the drive control unit 30. Furthermore, the discharge processing setting change unit 40 changes the set value of the pressure of machining fluid to be supplied to the machining fluid supply unit 50, and outputs this set value to the machining fluid supply unit 50.

The machining fluid supply device 50 is designed for supplying the machining fluid in the gap between the tool electrode 13 and the workpiece 14 in accordance with the set value of the machining fluid supply pressure.

### Second Composition:

In the above-described first composition, the tool electrode 13 is driven by the servomotor 11 in order to cause the relative movement between the tool electrode 13 and the workpiece 14. However, in the case of the second composition shown in Fig. 4, unlike the first composition, the relative movement between the tool electrode 13 and the workpiece 14 is controlled by the servomotor 11 and an X-Y table 15, although the rest of the composition is substantially the same.

Thus, the second composition will be described only for the parts differing from those of the first composition, omitting the description of the common parts.

The discharge processing machine 10 differs from that in the above-described first composition in that it is provided with the X-Y table 15, the rest of the composition being substantially the same as the corresponding part of the first composition. The X-Y table 15, supporting the workpiece 14 thereon, is a device capable of moving in both an X-axis direction and a Y-axis direction and is driven and controlled in response to the drive control signal supplied from the drive control unit 30. The X-Y table 15 is capable of adjusting relative position of the workpiece 13 to the tool electrode 14 in either X-axis direction or Y-axis direction.

The discharge processing machine 10 also comprises the servomotor 11 like the case of the first composition. This servomotor 11 is driven by the drive control signal supplied from the drive control unit 30 in the same manner as the X-Y table 15. This servomotor 11 is connected to the tool electrode 13 via a transmission for converting the rotational motion of the feed screw 12 or the like into the linear motion, in order to drive the tool electrode 13 in the Z-axis direction. Hence, in the second composition, the servomotor 11 and the X-Y table 15 cooperate to move the tool electrode 13 three-dimensionally with respect to the workpiece 14.

### (Composition of Program for Jump Control in accordance with the Present Invention)

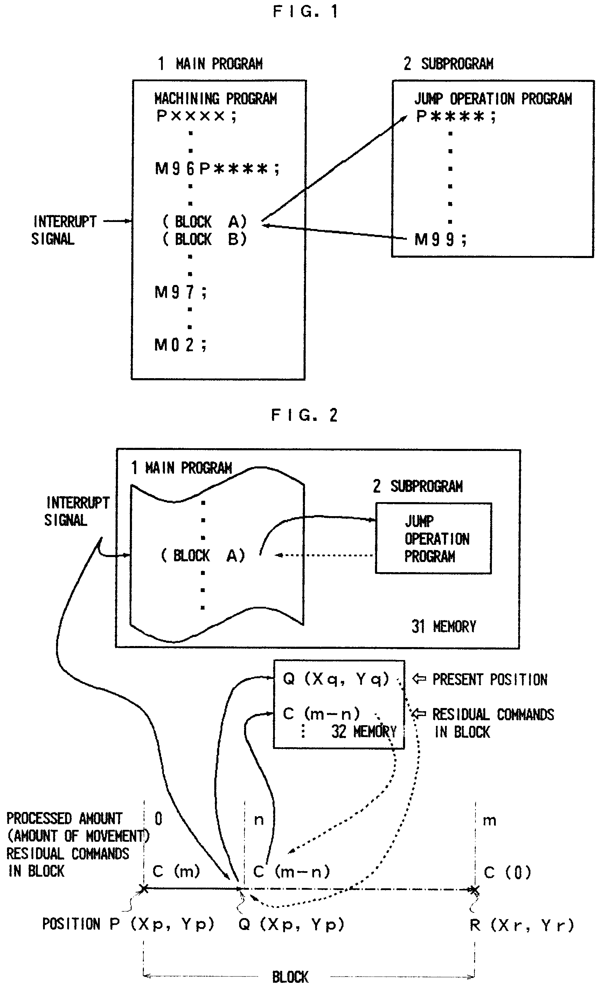

Next, the composition of the program for executing the jump control method for the diesinking discharge processing machine in accordance with the present invention will be explained. Fig. 1 is a diagram schematically illustrating the composition of the program used for executing the jump control method in accordance with the present invention.

The control of the diesinking discharge processing machine is performed in accordance with a machining program incorporated into a main program 1. In Fig. 1, the machining program is represented by "Pxxxx". On the other hand, the program used for performing the jump operation is provided as a subprogram 2 independent of the main program 1. Hereinafter, this subprogram is referred to as the jump operation program. In Fig. 1, the jump operation program is represented by "P****".

Thus, the ordinary discharge machining operation by the diesinking discharge machine is executed in accordance with the machining program "Pxxxx", while the jump operation is executed in accordance with the jump operation program "P****". According to the conventional method, the jump operation is controlled by the jump operation process program previously inserted in the main program. Unlike the conventional method, the present invention once interrupts the currently running main program in response to an interrupt signal and executes the jump operation program defined by the subprogram 2, thereby executing the jump operation.

Fig. 1 illustrates the condition in which an interrupt signal is entered during the execution of the block "A" in the main program 1. The control unit, when the interrupt signal is entered during the execution of the block "A", interrupts the machining operation for the block "A" in response to this interrupt signal, and instead executes the jump operation program "P****" of the subprogram 2 from the beginning thereof. Then, as soon as the jump operation program "P****" is completed, for example, with an indication by the code "M99", the control unit returns to the interrupted block "A" of the main program 1 to execute its remainder and the following block "B".

In the main program shown in Fig. 1, the code represented by "M96P****" designates the start point of a section in the main program permitting acceptance of interrupt signals for executing the jump operation program "P****", while the code "M97" designates the end point of the above section.

Thus, in the program shown in Fig. 1, the control unit selectively accepts interrupt signals during the execution of the main program only when such an interrupt signal is entered within the specified section interposed between the codes "M96P****" and "M97", and executes the jump operation program "P****" in response to thus accepted interrupt signal. On the other hand, if any interrupt signal is entered during the execution of a program section other than the above specified section interposed between the codes "M96P****" and "M97", the control unit ignores such interrupt signal, that is, the jump operation program "P****" will not be executed. By the way, the above codes are mere examples of the codes; thus, it is needless to say that any other codes may be used.

Providing such a special section for accepting interrupt signals makes possible the control of the jump operation in response to the interrupt signal in the middle of the execution of the main program. For example, if an interrupt signal is entered in a section other than the machining process of the workpiece 14, e.g. in a section for bringing the tool electrode 13 closer to the workpiece 14, this interrupt signal can be made to be neglected so that the jump operation will not be executed.

The interrupt signal is a signal inputted from the machine for executing the jump operation. The interrupt signal, for example, can be of a jump operation execution signal to be periodically generated or a signal notifying of excessive accumulation of machining chips in the gap between the tool electrode 13 and the workpiece 14. More specifically, the signal notifying of excessive accumulation of machining chips in the gap between the tool electrode 13 and the workpiece 14, for example, can be of a discharge condition signal obtainable by monitoring a voltage applied to the discharge processing power unit 20 or a signal obtainable by monitoring a gap voltage between the tool electrode 13 and the workpiece 14.

In the case where above described signals are used as interrupt signal, there is the possibility that the interrupt signal is generated even when the discharge machining operation is not in progress, or even when the interrupt signal is generated due to a cause other than the accumulation of the machining chips in the gap between the tool electrode 13 and the workpiece 14. If the jump operation is executed in response to such signal, as discussed previously, the jump operation will be executed in the process other than the machining process in which the jump operation is not necessary.

Thus, where the sections accepting the interrupt signal as disclosed in the embodiment of the present invention, the occurrence of the jump actions in the sections not requiring the jump action can be prevented.

### (Operation of Program for Jump Control in Accordance with the Present Invention)

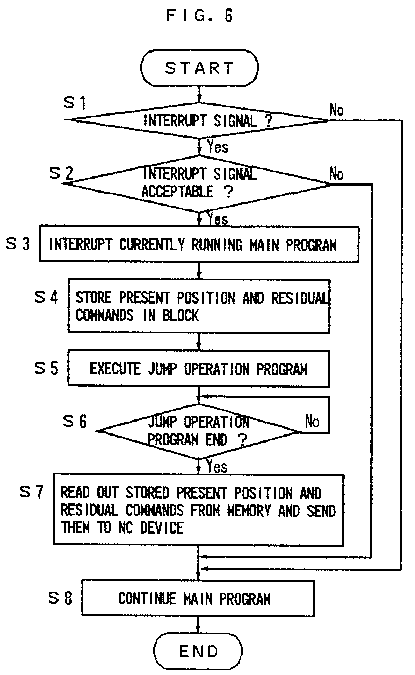

Next, details of the jump operation will be explained with reference to the diagram illustrating the program operation for the jump control in accordance with the present invention shown in Fig. 2, the diagram illustrating the operation for the jump control of the present invention shown in Figs. 5a and 5b, and the flow chart showing details of the operation for the jump control of the present invention shown in Fig. 6. By the way, explanation of the flow chart shown in Fig. 6 will be made referring to symbol "S" representing the steps of operation.

Fig. 2 shows memories 32, 33 and various blocks to be executed according to the main program 1. More specifically, the memory 32 stores the program consisting of the above-described main program 1 and subprogram 2. The memory 33 stores conditional quantities of the NC processing machine, such as a present position Q (Xq, Yq) of a currently executed block, residual commands in the currently execution block, and offset amounts. These memories 32 and 33 are provided in the drive control unit 30. Input and output control of the memories 32 and 33 is performed by the CPU also provided in the drive control unit 30.

Figs. 5a and 5b show the composition of CPU 31 and memories 32, 33 mutually connected via a bus in the drive control unit 30. The CPU 31 is further connected to the servomotor 11 and X-Y table 15 via the bus.

The CPU 31 makes a judgement as to whether any interrupt signal is entered from the machine to the drive control device 30 (Step S1). If any interrupt signal is judged to have been entered, the CPU 31 judges whether the entry has been made in the program section between, for example, the code M96**** and code M97 within the main program 1 currently executed by the CPU 31 (Step 2). The program section predetermined for accepting the interrupt signal can be discriminated by so designing the software. For instance, by providing a flag which operates in response to the code "M96P****" for the start of acceptance of interrupt signals, such a program section can be detected by monitoring the condition of such a flag.

Thus, if no interrupt signal is entered from the machine to the drive control unit 30 in the step S1, the CPU 31 continues the main program (Step S8).

When it is recognized in the above step S2 that the interrupt signal is entered within the predetermined program section for accepting interrupt signals, the CPU 31 interrupts the currently running main program (Step S3). Fig. 2 illustrates a case where interrupt signal is entered while the main program 1 is executing the block "A". In this case, the CPU 31 interrupts the execution of the main program in the middle of the block "A" in response to this interrupt signal . The lower part of Fig. 2 schematically shows the condition of execution the block "A". In this diagram, point P (Xp, Yp) represents a start point of the block "A", a point R (Xr, Yr) end point of the block "A", and a point Q (Xq, Yq) the machining point at which the interrupt signal was entered. Thus, at the time the interrupt signal is entered, a solid-line section ranging from the point P to the point Q corresponds to section already processed by executing the block "A", while an alternate long and short dash line section between the points Q and R is an unprocessed section to be processed by the residual commands of the block "A".

The CPU 31 reads out from the NC machine the position data (Xq, Yq), representing the position Q of the tool electrode 13 at which the interrupt signal was entered, and stores the position data into the memory 32. Furthermore, the CPU 31 stores the residual commands of the block "A" into the memory 32 (Step S4).

The residual commands of the block "A" can be calculated by providing a means for counting the executed commands in the block. For example, this purpose can be accomplished by providing a counter the CPU 31 with a counter which counts down as they are executed in succession in the block. If it is assumed that the total processing amount (e.g. amount of movement) of the block "A" is "m", the processed amount is "0" at the start point "P" of the block "A" and becomes "m" at the end point "R", while the processed amount at the intermediate point "Q" is "n". If the residual commands in the block registered by the counter is represented by C(m) as against the processed amount, the value registered by the counter at the start point (point P) of the block A can be given as "C(m)", the value registered at the end point (point R) as C(0), and the value registered in the middle as C(m-n).

Thus, the memory 32 stores the position data (Xq, Yq) of the point "Q" as representing the position of the tool electrode 13 at the time of the entry of the interrupt signal and the count value "C(m-n)" as representing the number of residual commands in the currently executed block at the time of the entry of the interrupt signal.

Besides the position data (Xq, Yq) of the point "Q" and the count value "C(m-n)" of the residual commands, the memory 32 also stores other data relating to the quantitative condition of the NC processing machine.

The CPU 31, after storing the data into the memory 32, reads out the jump operation program of subprogram 2 stored in the memory 33, and executes the jump operation (Step S5). Subsequently, after the jump operation program is finished, the CPU 31 reads out the data stored in the memory 32 and sends them to the NC processing machine (Step S7).

The time at which the jump operation program is finished can be detected by monitoring the code "M99" located in the subprogram 2 as shown in Fig. 1.

In Fig. 2, when the NC machine is driven based on the position data (Xq, Yq) of the point "Q" read out from the memory 32, the tool electrode 13 and the workpiece 14 restores their relative positions before the jump operation to return to the point "Q".

Next, the CPU 31, after completing the jump operation program of the subprogram 2, returns to the execution of block "A" of the main program 1, which has been interrupted in response to the interrupt signal, and restarts the discharge machining operation from the residual command identified by the readout count value C(m-n) in the block "A" (Step S8).

Furthermore, if it is recognized in the above step S2 that the time of entry of the interrupt signal is out of the predetermined program section for accepting interrupt signals, the CPU 31 continues the execution of the main program without performing the jump operation according to the interrupt processing defined by the steps S3 through step S7.

### (Generation of Interrupt signals)

Next, generation of interrupt signals will be explained with reference to Figs. 5a and 5b. The interrupt signal acts as a signal for executing the jump operation which is to be entered from the machine. Fig. 5 shows a case where the signal indicating that the machining chip has accumulated in the gap between the tool electrode 13 and workpiece 14 is used as interrupt signal.

More specifically, the example shown in Fig. 5a is a case where the interrupt signal is the discharge condition signal obtainable by monitoring the voltage applied to the discharge processing power unit 20. In the composition of Fig. 5a, a discharge condition detecting circuit 21 is provided on the side of the discharge processing power unit 20 to detect the voltage applied to the discharge processing power unit 20, and the detected voltage of the discharge processing power unit is compared with a given threshold value to detect the condition of machining chips accumulated in the gap between the tool electrode 13 and the workpiece 14 on the basis of variation of the applied voltage.

On the other hand, Fig. 5b shows a case where the interrupt signal is a discharge condition signal obtainable by the monitoring a gap voltage between the tool electrode 13 and the workpiece 14. In the composition of Fig. 5b, a discharge condition detecting circuit 34, provided on the side of the drive control unit 30, detects a voltage difference between the tool electrode 13 and the workpiece 14 to compare detected gap voltage with a given threshold value, and detects the condition of machining chips accumulated in the gap between the tool electrode 13 and the workpiece 14 on the basis of variation of the gap voltage.

Besides above-described signals, the jump operation execution signal to be periodically generated from the NC machine or the CPU 31 may be used as the interrupt signal. Using this type of interrupt signal enables us to omit the above-described discharge condition detecting circuit 21 or 34; however, this has a shortcoming that the jump operation is executed irrespective of the condition of the chip in the gap between the tool electrode 13 and the workpiece 14, thereby ending up with that the jump operation will not be executed when necessary or executed when unnecessary.

### (Jump Operation)

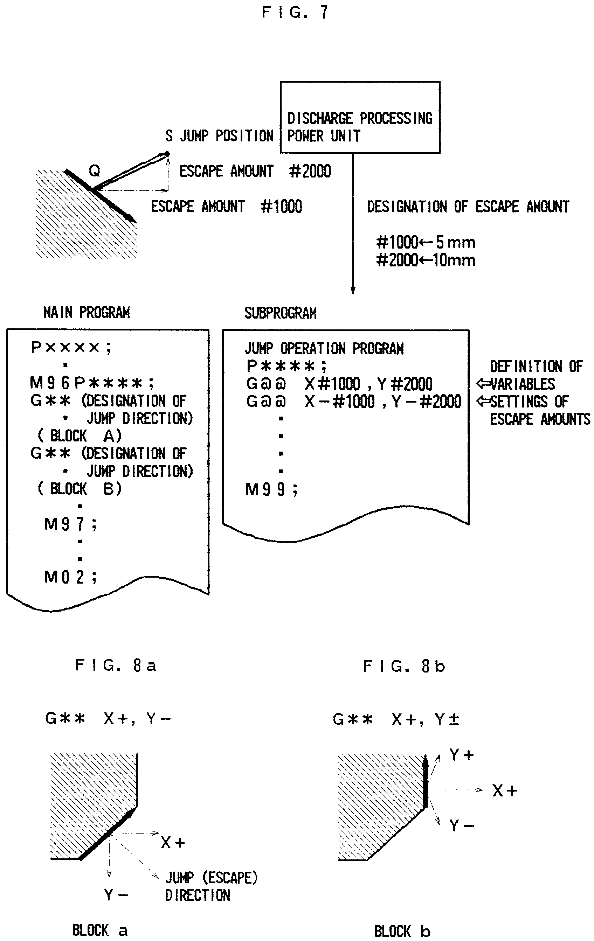

Next, the jump direction and jump amount (i.e. escape amount) in the jump operation will be explained with reference to Figs. 7, 8a and 8b each illustrating the jump operation of the present invention.

In the jump operation of the jump process, it is necessary to determine the jump direction on the basis of the positional relation between the workpiece 14 and the tool electrode 13, and also determine the jump amount (i.e. escape amount) on the basis of the gap condition between the tool electrode 13 and the workpiece 14.

In the embodiment of the present invention, the jump direction of the jump operation is determined by designating the jump-able direction beforehand in the main program, while the escape amount of the jump operation is determined by changing the value of the variable defined in the subprogram based on the designation of the escape amount from the discharge processing power unit.

First, the jump direction of the jump operation will be explained. In the main program shown in Fig. 7, for example, a code, such as "G**", is used to designate the jump-able direction. This designation is made by finding a jump-able direction beforehand on the basis of the positional relation between the tool electrode and the workpiece in the machining operation.

For example, Fig. 8a shows jump-able directions when the machining operation of block "A" as denoted by a solid arrow is executed with respect to the workpiece (a shaded portion in the drawing). In the drawing, a positive direction of the X-axis (X+) and a negative direction of the Y-axis (Y-) are both jump-able (or escapable) directions. Hence, the jump-able directions can be designated by codes such as "G** X+, Y-".

Furthermore, Fig. 8b shows a jump-able directions when the machining operation of block "B" as denoted by a solid arrow is executed with respect to the workpiece (a shaded portion in the drawing). In the drawing, the positive direction of the X-axis (X+), a positive direction of the Y-axis (Y+) or the negative direction of the Y-axis (Y-) are jump-able (or escapable) directions. Hence, the jump-able directions in this case can be designated by codes "G** X+, Y±".

The above-described code name and the method for designating the jump-able directions are merely shown as examples; therefore, any other proper names and designation methods (e.g. designation by angle, or designation of a quadrant in the coordinate system, etc) can be used. If the designation by angle is adopted for designating the jump direction, it will produce an effect that the designation can be made more finely. On the other hand, if the designation quadrant is adopted for designating the jump direction, it will be effective for reducing the volume of the program to be prepared.

Next, the escape amount (i.e. jump amount) in the jump operation will be explained. The escape amount, for example, can be specified by a code "G@@" in the subprogram as shown in Fig. 7. More specifically, in the subprogram, the codes "G@@ X#1000, Y#2000" are used to define variables, while the following codes "G@@ X-#1000, Y-#2000" are used to designate the escape amount. In the definitions of variables, "X#1000" defines a variable of an escape amount in the X-axis, and "Y#2000" defines a variable of an escape amount in the Y-axis direction. Escape amounts in the subprogram can be set by inputting escape amounts from the discharge processing apparatus. The setting of escape amounts in the subprogram is made by inputting an escape amount to each of the defined variables #1000 and #2000 from the discharge processing apparatus. For example, if 5mm is inputted for #1000 and 10mm for #2000, 5mm and 10mm are set by the code "G@@ X-#1000 and Y-#2000" for the variables #1000 and #2000 respectively.

Thus, the jump is made by the amount for the escape, the value of which is dependent on the value which is defined as a variable in the subprogram with respect to the direction set in the main program and inputted from the discharge processing machine.

When the jump operation is finished, the jump is made in the opposite direction by the same amount as that of the jump for escape, so that the tool electrode can return to the previous position.

As explained above, according to the jump control method of the diesinking discharge processing machine of the present invention, the jump operation program for executing the jump operation is created as a subprogram, and there is provided a memory for storing the condition of the main program under which its execution was interrupted in response to an interrupt signal. Thus, when an interrupt signal is entered, the currently running main program is interrupted, and the condition of the main program under which its execution was interrupted is stored in the memory. Then, the jump operation program in the subprogram is executed, thereby executing the jump operation. Furthermore, after finishing the jump operation, the main program having been suspended is restarted from the interrupted point by referring to the data stored in the memory. Thus, the main program can be executed without discontinuity.

### (Modifications of the Present Invention)

As a modification of the present invention in which the subprogram is executed in response to an interrupt signal, there is one in which the main program include the program section for permitting acceptance of the interrupt signal. According to this embodiment, the execution of the machining program can be controlled so that the subprogram will be executed when the interrupt signal is entered during the execution the above-described program section provided for accepting the interrupt signal, while the subprogram will not be executed when the interrupt signal is entered during the execution of the part of the program other than the program section for accepting the interrupt signal. Thus, it becomes possible to prevent the unnecessary jump operation from being performed when the discharge processing machine is not in the machining operation.

Furthermore, as a modification of the composition for relative movement of the tool electrode and the workpiece according to the present invention, the tool electrode is connected a servomotor so as to be movable in any of X-, Y- and X-axis directions. In another modification, the tool electrode connected to a servomotor is made movable only in the Z-axis direction, while the workpiece is made movable in any of X- and Y-axis directions by the X-Y table.

Still further, as a modification of the interrupt signal according to the present invention, an interrupt signal may be generated by detecting a voltage applied to the electrodes by the discharge processing power unit. As another modification of the interrupt signal, an interrupt signal may be generated by detecting a gap voltage between the tool electrode and the workpiece. Further, as another modification, a periodically generated interrupt signal can be used as an interrupt signal.

Yet further, as a modification of the present invention for designating the jump operation, the jump direction can be designated in the main program, while the jump amount (i.e. escape amount) can be designated in the subprogram by the variable defined therein and the data inputted from the discharge processing power unit to determine the value of the variable.

As explained above, the present invention provides a jump control method capable of executing the jump operation by the subprogram, which is applicable to the jump control by the distincting discharge processing machine. Moreover, in the jump control method for the diesinking discharge processing machine, the present invention provides a jump control method capable of starting the jump operation in response to an interrupt signal.

## Claims

1. A jump control method for a diesinking discharge processing machine, the method being for tool electrode and designed for temporarily stopping a discharge during a machining operation, widening a gap between the tool electrode and a workpiece, supplying machining fluid into the gap, and thereafter narrowing the gap, in order to remove machining chips accumulated in the gap together with the machining fluid, wherein
a program for performing the jump operation is created as a subprogram; the subprogram is executed by interrupting a main program for performing a discharge machining operation, and the main program is resumed from an interrupted point after the jump operation is finished in accordance with said subprogram.

2. A jump control method for a diesinking discharge processing machine, said method being for tool electrode and designed for temporarily stopping a discharge during a machining operation, widening a gap between the tool electrode and a workpiece, supplying machining fluid into the gap, and thereafter narrowing the gap, in order to remove machining chips accumulated in the gap together with the machining fluid, wherein
a program for performing the jump operation is created as a subprogram, said subprogram is executed by interrupting a main program for performing a discharge machining operation in response to an interrupt signal, and the main program is resumed from an interrupted point after the jump operation is finished in accordance with said subprogram.

3. A jump control method for a diesinking discharge processing machine, the method being for tool electrode and designed for temporarily stopping a discharge during a machining operation, widening a gap between the tool electrode and a workpiece, supplying machining fluid into the gap, and thereafter narrowing the gap, in order to remove machining chips accumulated in the gap together with the machining fluid, wherein
a program for performing the jump operation is created as a subprogram, said subprogram is executed by interrupting a main program for performing a discharge machining operation in response to an interrupt signal and storing condition of said main program at the point of its interruption, and the main program is resumed from an interrupted point by reading out the stored condition relating to its progress after the jump operation is finished in accordance with said subprogram.

4. The jump control method for the diesinking discharge processing machine defined by claim 3, wherein said storage of the data relating to executed portion of said main program up to the time at which the main program is interrupted is made by storing a position of the tool electrode and residual commands in the main program.

5. The jump control method for the diesinking discharge processing machine defined by claim 3, wherein said residual commands are stored by using a counter that counts down in accordance with progress of said main program.
